# EUROPÄISCHE PATENTSCHRIFT

(11) **EP 2 677 245 B1**
(45) Veröffentlichungstag und Bekanntmachung des Hinweises auf die Patenterteilung: **08.03.2023**
(21) Anmeldenummer: 13169750.0
(22) Anmeldetag: 29.05.2013
(51) Int. Cl.: F24F 7/013, F24F 11/75, F24F 11/74, F24F 11/00, F24F 7/00

(54) **LÜFTUNGSSYSTEM ZUR BELÜFTUNG UND/ODER ZUR ENTLÜFTUNG EINES RAUMES**
VENTILATION SYSTEM FOR VENTILATING AND/OR FOR AIR EXTRACTION FROM A ROOM
SYSTÈME DE VENTILATION POUR L'AÉRATION ET/OU LA PURGE D'AIR D'UNE PIÈCE

(30) Priorität: 18.06.2012 DE 202012102236 U
(43) Veröffentlichungstag der Anmeldung: 25.12.2013
(73) Patentinhaber: TROX GmbH, 47506 Neukirchen-Vluyn (DE)
(72) Erfinder: Schönberger, Sandra, 50737 Köln (DE); Baumeister, Gregor, 47802 Krefeld (DE)
(74) Vertreter: Dr. Stark & Partner Patentanwälte mbB

(56) Entgegenhaltungen:
- GB-A- 936 164
- US-A- 2 983 213

## Beschreibung

Die Erfindung betrifft ein Lüftungssystem zur Belüftung und/oder zur Entlüftung eines Raumes mit einem sich zwischen einer gebäudeaußenseitigen Öffnung und einer rauminnenseitigen Öffnung erstreckenden Kanal, wobei in dem Kanal eine Luftfördereinrichtung vorgesehen ist.

Bekannte Lüftungssysteme weisen einen Kanal auf, der sich zwischen einer gebäudeaußenseitigen Öffnung und einer rauminnenseitigen Öffnung erstreckt. In dem Kanal ist eine Luftfördereinrichtung vorgesehen. In dezentralen Lüftungssystemen werden vorwiegend Luftfördereinrichtungen mit integrierter Volumenstromregelung eingesetzt. Bei wechselnden Differenzdrücken, wie sie z.B. bei Winddruck oder Windsog auf der Fassade entstehen können, verändern die Luftfördereinrichtungen ihre Drehzahl, um den Volumenstrom konstant zu halten. GB 936 164 offenbare ein Lüftungssystem gemäß dem Oberbegriff des Anspruchs 1.

Als Nachteil erweist sich, dass Luftfördereinrichtungen mit integrierter Volumenstromregelung im unteren Volumenstrombereich mit einem erweiterten Toleranzband arbeiten, so dass beispielsweise bei großen Differenzdrücken keine hinreichende Regelgenauigkeit gewährleistet ist.

Aufgabe der Erfindung ist es, die vorgenannten Nachteile zu vermeiden und ein Lüftungssystem anzugeben, das eine präzisere Steuerung oder Regelung des Volumenstroms in Lüftungssystemen, insbesondere in dezentralen Lüftungssystemen, ermöglicht.

Diese Aufgabe wird dadurch gelöst, dass die Luftfördereinrichtung mit einer Regelung für eine konstante Drehzahl oder eine konstante Volumenstromförderung verbunden ist und dass entweder
das Lüftungssystem eine Rückführung aufweist, die in Strömungsrichtung gesehen nach der Luftfördereinrichtung aus dem Kanal abzweigt und die in eine in dem Kanal in Strömungsrichtung gesehen vor der Luftfördereinrichtung angeordnete Verteileinrichtung mündet, die zur Verteilung, insbesondere zur Regelung, der Anteile des durch die Rückführung und durch den in Strömungsrichtung gesehen vor der Verteileinrichtung befindlichen Kanal jeweils strömenden Luftstroms ausgebildet ist
   oder
das Lüftungssystem eine Rückführung aufweist, die aus einer in dem Kanal in Strömungsrichtung gesehen nach der Luftfördereinrichtung angeordneten Verteileinrichtung abzweigt und die in Strömungsrichtung gesehen vor der Luftfördereinrichtung in den Kanal mündet, wobei die Verteileinrichtung zur Verteilung, insbesondere zur Regelung, der Anteile des durch die Rückführung und durch den in Strömungsrichtung gesehen nach der Verteileinrichtung befindlichen Kanal jeweils strömenden Luftstroms ausgebildet ist.

Die Verteileinrichtung kann beispielsweise eine Klappe aufweisen, die vorzugsweise stufenlos zwischen zwei Endlagen verschwenkbar ist. In der einen Endlage wird die Rückführung vollständig verschlossen. In der anderen Endlage wird je nach Anordnung der Verteileinrichtung bei den beiden alternativen Ausgestaltungen des Lüftungssystems entweder der in Strömungsrichtung gesehen vor der Verteileinrichtung befindliche Kanal oder der in Strömungsrichtung gesehen nach der Verteileinrichtung befindliche Kanal vollständig verschlossen. Selbstverständlich sind auch Zwischenstellungen möglich.

Zur Verstellung kann beispielsweise ein Antrieb vorgesehen sein. Selbstverständlich sind auch andere geeignete Aktoren, wie beispielsweise ein Balg, der sich in Abhängigkeit des herrschenden Druckes zusammenzieht oder aufgeblasen wird, denkbar. Durch das erfindungsgemäße Lüftungssystem kann das Toleranzband der Luftfördereinrichtung im unteren Volumenstrombereich verkleinert werden.

Es bietet sich an, wenn die Stellung der Verteileinrichtung mittels einer Steuer- oder Regeleinrichtung oder eines mit einer Steuer- oder Regeleinrichtung verbundenen Antriebes veränderbar ist. Die Verbindung zwischen den einzelnen Komponenten, beispielsweise zwischen dem Antrieb und der Steuer- oder Regeleinrichtung, kann drahtgebunden oder funkbasiert ausgebildet sein. Die Regeleinrichtung funktioniert bei hohen Differenzdrücken als Volumenstrombegrenzer.

Sofern das Lüftungssystem eine Rückführung aufweist, die in Strömungsrichtung gesehen nach der Luftfördereinrichtung aus dem Kanal abzweigt und die in eine in dem Kanal in Strömungsrichtung gesehen vor der Luftfördereinrichtung angeordnete Verteileinrichtung mündet, die zur Verteilung, insbesondere zur Regelung, der Anteile des durch die Rückführung und durch den in Strömungsrichtung gesehen vor der Verteileinrichtung befindlichen Kanal jeweils strömenden Luftstroms ausgebildet ist, kann in dem in Strömungsrichtung gesehen vor der Verteileinrichtung befindlichen Kanal zumindest ein mit der Steuer- oder Regeleinrichtung verbundener Sensor zur Bestimmung des dortigen Volumenstroms oder der Strömungsgeschwindigkeit vorgesehen sein. Damit können Abweichungen beispielsweise in der Geschwindigkeit des in dem vor der Verteileinrichtung befindlichen Kanal strömenden Volumenstroms gemessen werden. Derartige Abweichungen können auftreten, wenn sich die auf eine Fassade wirkenden Windlasten ändern. Zumindest ein Sensor kann funkbasiert oder auch drahtgebunden mit zumindest einer weiteren Komponente, beispielsweise der Steuer- oder Regeleinrichtung, verbunden sein.

Sofern das Lüftungssystem eine Rückführung aufweist, die aus einer in dem Kanal in Strömungsrichtung gesehen nach der Luftfördereinrichtung angeordneten Verteileinrichtung abzweigt und die in Strömungsrichtung gesehen vor der Luftfördereinrichtung in den Kanal mündet, wobei die Verteileinrichtung zur Verteilung, insbesondere zur Regelung, der Anteile des durch die Rückführung und durch den in Strömungsrichtung gesehen nach der Verteileinrichtung befindlichen Kanal jeweils strömenden Luftstroms ausgebildet ist, kann in dem in Strömungsrichtung gesehen nach der Verteileinrichtung befindlichen Kanal zumindest ein mit der Steuer- oder Regeleinrichtung verbundener Sensor zur Bestimmung des dortigen Volumenstroms oder der Strömungsgeschwindigkeit vorgesehen sein. Damit können Abweichungen beispielsweise in der Geschwindigkeit des in dem nach der Verteileinrichtung befindlichen Kanal strömenden Volumenstroms gemessen werden. Derartige Abweichungen können auftreten, wenn sich die auf eine Fassade wirkenden Windlasten ändern. Zumindest ein Sensor kann funkbasiert oder auch drahtgebunden mit zumindest einer weiteren Komponente, beispielsweise der Steuer- oder Regeleinrichtung, verbunden sein.

Zumindest ein Sensor kann als Drucksensor oder dergleichen ausgebildet sein. Selbstverständlich sind auch andere Sensortypen, wie z.B. ein Staurohr oder ein Hitzdrahtanemometer, möglich.

Die Luftfördereinrichtung ist mit einer Regelung für eine konstante Drehzahl oder eine konstante Volumenstromförderung verbunden. Die Regelung kann in die Luftfördereinrichtung direkt integriert sein. Es ist auch selbstverständlich möglich, dass diese Regelung in einem getrennten Bauteil vorgesehen ist. Selbstverständlich ist es auch möglich, dass die Luftfördereinrichtung mit einer geeigneten Regel- oder Steuereinrichtung verbunden ist, um die Leistung entsprechend steuern oder regeln zu können.

Im Folgenden werden in den Zeichnungen dargestellte Ausführungsbeispiele der Erfindung erläutert. Es zeigen:
- Fig. 1: ein erstes Ausführungsbeispiel eines erfindungsgemäßen Lüftungssystems im Fortluftbetrieb,
- Fig. 2: eine alternative Ausgestaltung eines erfindungsgemäßen Lüftungssystems im Fortluftbetrieb,
- Fig. 3: den Gegenstand nach Fig. 1 im Außenluftbetrieb und
- Fig. 4: den Gegenstand nach Fig. 2 im Außenluftbetrieb.

In allen Figuren werden für gleiche bzw. gleichartige Bauteile übereinstimmende Bezugszeichen verwendet.

Die Figuren zeigen den prinzipiellen Aufbau eines dezentralen Lüftungssystems. Das Lüftungssystem weist einen Kanal 1 auf, der sich zwischen einer gebäudeaußenseitigen Öffnung 2 und einer rauminnenseitigen Öffnung erstreckt. In dem Kanal 1 ist eine Luftfördereinrichtung 3 vorgesehen. Die gebäudeaußenseitige Öffnung 2 befindet sich in einer angedeuteten Wand 4. Die rauminnenseitige Öffnung ist nicht dargestellt. Sie befindet sich jedoch im Bereich des Endes des Kanals 1, das dem Ende mit der gebäudeaußenseitigen Öffnung 2 gegenüberliegend angeordnet ist.

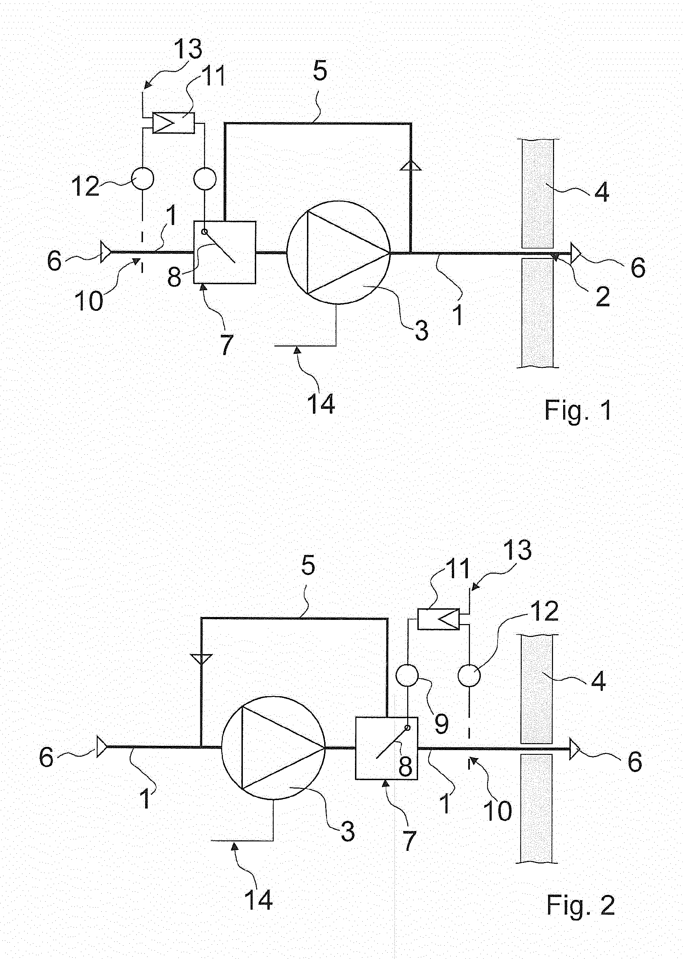

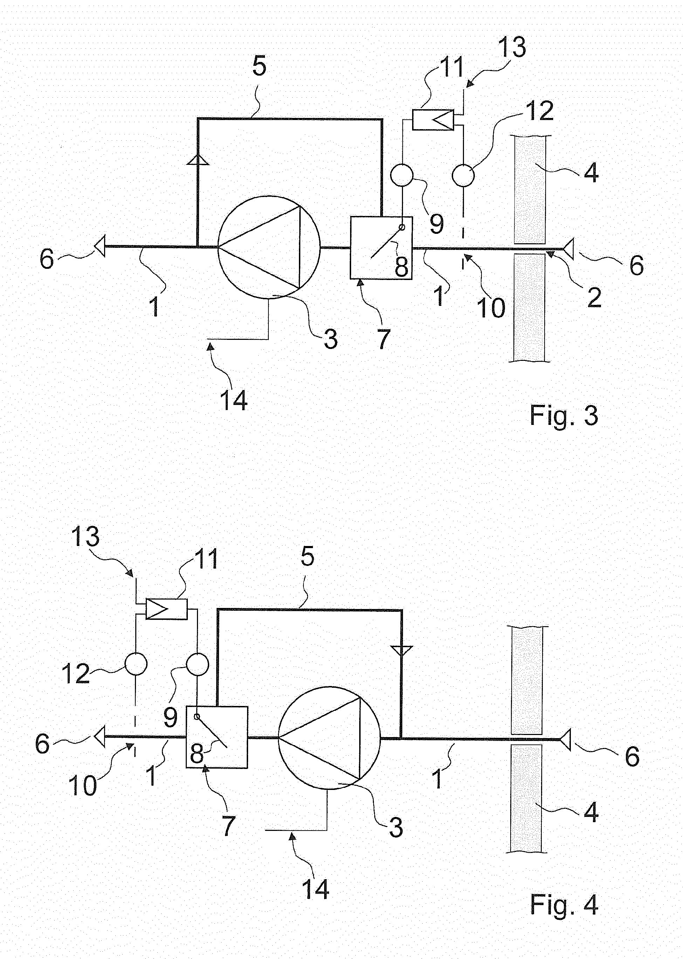

Zusätzlich umfasst das Lüftungssystem eine Rückführung 5. Bei den Ausführungsbeispielen nach den Fig. 1 und 3 zweigt die Rückführung 5 in Strömungsrichtung 6 gesehen nach der Luftfördereinrichtung 3 aus dem Kanal 1 ab und mündet in eine in dem Kanal 1 in Strömungsrichtung 6 gesehen vor der Luftfördereinrichtung 3 angeordnete Verteileinrichtung 7 .

In den Fig. 2 und 4 ist eine alternative Ausführungsform dargestellt. Hier ist die Verteileinrichtung 7 in dem Kanal 1 in Strömungsrichtung 6 gesehen nach der Luftfördereinrichtung 3 angeordnet. Die Rückführung 5 zweigt aus der Verteileinrichtung 7 ab und mündet in Strömungsrichtung 6 gesehen vor der Luftfördereinrichtung 3 wieder in den Kanal 1.

Die Verteileinrichtung 7 weist ein geeignetes Bauteil auf, das bei den Ausführungsbeispielen nach den Figuren 1 und 3 eine Verteilung, insbesondere eine Regelung, der Anteile des durch die Rückführung 5 und durch den in Strömungsrichtung 6 gesehen vor der Verteileinrichtung 7 befindlichen Kanal 1 jeweils strömenden Luftstroms ermöglicht.

Bei den Ausführungsbeispielen nach den Figuren 2 und 4 ermöglicht die Verteileinrichtung 7 eine Verteilung, insbesondere eine Regelung, der Anteile des durch die Rückführung 5 und des durch den in Strömungsrichtung 6 gesehen nach der Verteileinrichtung 7 befindlichen Kanal 1 jeweils strömenden Luftstroms.

In den dargestellten Ausführungsbeispielen weist die Verteileinrichtung 7 als Bauteil eine Klappe 8 auf, die durch einen Antrieb 9 in ihrer Stellung verstellt werden kann.

Jede Verteileinrichtung 7 ist vorzugsweise stufenlos zwischen ihren beiden jeweiligen Endlagen verschwenkbar. In der einen Endlage wird die Rückführung 5 vollständig verschlossen. In der anderen Endlage wird bei den Ausführungsbeispielen nach den Fig. 1 und 3 der in Strömungsrichtung 6 gesehen vor der Verteileinrichtung 7 befindliche Kanal 1 vollständig verschlossen.

Bei dem Ausführungsbeispiel nach den Fig. 2 und 4 wird in der anderen Endlage der in Strömungsrichtung 6 gesehen nach der Verteileinrichtung 7 befindliche Kanal 1 vollständig verschlossen. Selbstverständlich sind Zwischenstellungen möglich.

Bei den Ausführungsbeispielen nach den Figuren 1 und 3 ist in dem in Strömungsrichtung 6 gesehen vor der Verteileinrichtung 7 befindlichen Kanal 1 ein Sensor 10 vorgesehen. Bei den Ausführungsbeispielen nach den Figuren 2 und 4 ist der Sensor 10 in dem Kanal 1 in Strömungsrichtung 6 gesehen nach der Verteileinrichtung 7 angeordnet.

Der Sensor 10 dient zur Bestimmung des dortigen Volumenstroms oder der dortigen Strömungsgeschwindigkeit. Der Sensor 10 ist mit einer Steuer- oder Regeleinrichtung 11 verbunden. Zwischen dem Sensor 10 und der Steuer- und/oder Regeleinrichtung 11 ist ein Wandler 12 vorgesehen, der das durch den Sensor 10 ermittelte Signal in ein entsprechendes Spannungssignal umwandelt.

Ferner ist eine Führungsgröße 13 angedeutet. Hierbei handelt es sich um eine von außen auf die Steuer- oder Regeleinrichtung 11 zugeführte Größe, der die Regelgröße in einer vorgegebener Abhängigkeit folgen soll. Die Führungsgröße 13 bestimmt in der Regeleinrichtung 11 den einzuhaltenden Sollwert der Regelgröße. Die Führungsgröße 13 kann konstant sein oder einen von der Zeit oder anderen Größen abhängigen Wert haben.

Die Luftfördereinrichtung 3 weist eine nicht näher dargestellte Regelung 14 auf, um eine konstante Drehzahl oder eine konstante Volumenstromförderung zu gewährleisten. Bei der Regelung 14 kann es sich beispielsweise um eine intern verbaute Regelung handeln, die bei einer volumenkonstanten Luftfördereinrichtung 3 die Drehzahl automatisch an die jeweilige Situation anpasst.

Die Sollwerte für die Luftfördereinrichtung 3 und für die Verteileinrichtung 7 sollten im Idealfall möglichst gleich sein. Aufgrund der zu erwartenden Regeltoleranzen kann der Ist-Wert der Luftfördereinrichtung 3 von dem Ist-Wert der Verteileinrichtung 7 abweichen. Liegt der Ist-Wert der Luftfördereinrichtung 3 über dem Ist-Wert der Verteileinrichtung 7, wird die Differenz der Ist-Werte (kleiner Teilvolumenstrom) über die Rückführung 5 von der Druckseite der Luftfördereinrichtung 3 zur Saugseite der Luftfördereinrichtung 3 geführt.

Die Fig. 1 und 3 zeigen die erste Ausführungsform des erfindungsgemäßen Lüftungssystems im Fortluftbetrieb bzw. im Außenluftbetrieb, wobei in Fig. 1 der Fortluftbetrieb und in Fig. 3 der Außenluftbetrieb dargestellt ist.

Zu der alternativen Ausführungsformen ist in Fig. 2 der Fortluftbetrieb und in Fig. 4 der Außenluftbetrieb skizziert.

Die Betriebsweise der erfindungsgemäßen Lüftungssysteme ist wie folgt:
Befindet sich die Fassade auf der Luvseite des Gebäudes, d.h. es wirkt eine Windlast auf die Wand 4, so kann der Ist-Wert des in den Fig. 1 und 2 eingezeichneten Fortluftvolumenstromes unter den Sollwert fallen. Die Regelkreise der Luftfördereinrichtung 3 und der Verteileinrichtung 7 bewirken, dass durch Änderung der Drehzahl der Luftfördereinrichtung 3 und/oder durch die Verstellung der Klappe 8 der Verteileinrichtung 7 der Ist-Wert bis zur Erreichung des Sollwertes angehoben wird.

Herrscht im Bereich der Fassade ein Unterdruck, d.h. die Wand 4 ist auf der Leeseite des Gebäudes, drosselt die Verteileinrichtung 7 bei zunehmendem Fassadenunterdruck den Kanal 1, während die Drehzahl der Luftfördereinrichtung 3 reduziert wird. Eine unkontrollierte Fortluftströmung aus dem Kanal 1 über die gebäudeaußenseitige Öffnung 2 ins Freie wird somit unterbunden. Differenzen in dem Fortluftvolumenstrom zwischen dem Istwert der Luftfördereinrichtung 3 und dem Istwert der Verteileinrichtung 7 werden über die Rückführung 5 ausgeglichen.

Wirkt auf die Fassade eine Windlast, drosselt mit zunehmendem Fassadenüberdruck die Verteileinrichtung 7 den Kanal 1, während die Drehzahl der Luftfördereinrichtung 3 reduziert wird. Eine unkontrollierte Strömung von Außenluft (Fig. 3 und 4) über den Kanal 1 in den Raum wird somit unterbunden. Differenzen in dem Außenluftvolumenstrom zwischen dem Istwert der Luftfördereinrichtung 3 und dem Istwert der Verteileinrichtung 7 werden über die Rückführung 5 ausgeglichen.

Befindet sich die Fassade auf der Leeseite des Gebäudes, öffnet mit zunehmendem Fassadenunterdruck die Verteileinrichtung 7 den Kanal 1 weiter, so dass die Rückführung 5 zunehmend gedrosselt wird. Parallel hierzu steigt die Drehzahl der Luftfördereinrichtung 3 bis zur Erreichung des Sollwerts des Außenluftvolumenstroms an.

Das erfindungsgemäße Lüftungssystem erlaubt eine präzise Steuerung oder Regelung des jeweiligen Volumenstroms in unterschiedlich ausgestalteten Lüftungssystemen, insbesondere in dezentralen Lüftungssystemen. Auf veränderliche Widerstände, wie sie beispielsweise durch verschmutzte Filter auftreten können, reagiert das gesamte System wie bei veränderlichen Windlasten. Bei den dargestellten Ausführungsbeispielen ist jedes Lüftungssystem entweder für den Außenluft- oder für den Fortluftbetrieb ausgebildet. In einem solchen Fall sind für die Be- und Entlüftung eines Raumes zumindest zwei entsprechende Lüftungssysteme erforderlich.

Sofern eine Luftfördereinrichtung 3 in ihrer Drehrichtung veränderbar ist, ist ein Lüftungssystem ausreichend. In der einen Drehrichtung wird eine Belüftung (Außenluftbetrieb) und in der anderen Drehrichtung der Luftfördereinrichtung 3 eine Entlüftung (Fortluftbetrieb) erzielt.

## Patentansprüche

1. Lüftungssystem zur Belüftung und/oder zur Entlüftung eines Raumes mit einem sich zwischen einer gebäudeaußenseitigen Öffnung (2) und einer rauminnenseitigen Öffnung erstreckenden Kanal (1), wobei in dem Kanal (1) eine Luftfördereinrichtung (3) vorgesehen ist, **dadurch gekennzeichnet, dass** die Luftfördereinrichtung (3) mit einer Regelung (14) für eine konstante Drehzahl oder eine konstante Volumenstromförderung verbunden ist und dass
entweder
das Lüftungssystem eine Rückführung (5) aufweist, die in Strömungsrichtung (6) gesehen nach der Luftfördereinrichtung (3) aus dem Kanal (1) abzweigt und die in eine in dem Kanal (1) in Strömungsrichtung (6) gesehen vor der Luftfördereinrichtung (3) angeordnete Verteileinrichtung (7) mündet, die zur Verteilung, insbesondere zur Regelung, der Anteile des durch die Rückführung (5) und durch den in Strömungsrichtung (6) gesehen vor der Verteileinrichtung (7) befindlichen Kanal (1) jeweils strömenden Luftstroms ausgebildet ist,
oder
das Lüftungssystem eine Rückführung (5) aufweist, die aus einer in dem Kanal (1) in Strömungsrichtung (6) gesehen nach der Luftfördereinrichtung (3) angeordneten Verteileinrichtung (7) abzweigt und die in Strömungsrichtung (6) gesehen vor der Luftfördereinrichtung (3) in den Kanal (1) mündet, wobei die Verteileinrichtung (7) zur Verteilung, insbesondere zur Regelung, der Anteile des durch die Rückführung (5) und durch den in Strömungsrichtung (6) gesehen nach der Verteileinrichtung (7) befindlichen Kanal (1) jeweils strömenden Luftstroms ausgebildet ist.

2. Lüftungssystem nach dem vorhergehenden Anspruch, **dadurch gekennzeichnet, dass** die Verteileinrichtung (7) eine Klappe (8) aufweist.

3. Lüftungssystem nach einem der vorhergehenden Ansprüche, **dadurch gekennzeichnet, dass** die Stellung der Verteileinrichtung (7) mittels einer Steuer- oder Regeleinrichtung (11) oder eines mit einer Steuer- oder Regeleinrichtung (11) verbundenen Antriebes (9) veränderbar ist.

4. Lüftungssystem nach dem vorhergehenden Anspruch, **dadurch gekennzeichnet, dass** in dem in Strömungsrichtung (6) gesehen vor der Verteileinrichtung (7) befindlichen Kanal (1) zumindest ein mit der Steuer- oder Regeleinrichtung (11) verbundener Sensor (10) zur Bestimmung des dortigen Volumenstroms oder der Strömungsgeschwindigkeit vorgesehen ist.

5. Lüftungssystem nach Anspruch 3 oder 4, **dadurch gekennzeichnet, dass** in dem in Strömungsrichtung (6) gesehen nach der Verteileinrichtung (7) befindlichen Kanal (1) zumindest ein mit der Steuer- oder Regeleinrichtung (11) verbundener Sensor (10) zur Bestimmung des dortigen Volumenstroms oder der Strömungsgeschwindigkeit vorgesehen ist.

6. Lüftungssystem nach einem der beiden vorhergehenden Ansprüche, **dadurch gekennzeichnet, dass** zumindest ein Sensor (10) als Drucksensor oder dergleichen ausgebildet ist.

## Claims

1. Ventilation system for ventilating and/or extracting air from a room or space, via a channel (1) extending between an opening (2) on the outer side of the building and an opening on the inner side of the room or space, wherein an air conveying device (3) is provided in the channel (1), **characterised in that** the air conveying device (3) is connected to a regulating device (14) for a constant revolution speed or for conveying a constant volume flow, and that
either
the ventilation system comprises a return guide (5) which, seen in the direction of flow (6), branches away from the channel (1) downstream of the air conveying device (3), and which opens into a distribution device (7), arranged upstream of the air conveying device (3) in the channel (1), seen in the direction of flow (6), which is configured such as to distribute, and in particular to regulate, the portions of the respective air flow flowing in each case through the return guide (5) and through the channel (1) located upstream of the distribution device (7), seen in the direction of flow (6),
or
the ventilation system comprises a return guide (5), which, seen in the direction of flow (6), branches away from the distribution device (7) which is arranged in the channel (1) downstream of the air conveying device (3), and which, seen in the direction of flow (6), opens into the channel (1) upstream of the air conveying device (3), wherein the distribution device (7) is configured for the distribution, and in particular the regulation, of the portions of the respective air flow flowing through the return guide (5) and through the channel (1) which, seen in the direction of flow (6), is located downstream of the distribution device (7).

2. Ventilation system according to the preceding claim, **characterised in that** the distribution device (7) comprises a flap (8).

3. Ventilation system according to any one of the preceding claims, **characterised in that** the setting of the distribution device (7) can be changed by means of a control or regulating device (11) or by means of a drive (9) connected to the control or regulating device (11).

4. Ventilation system according to any one of the preceding claims, **characterised in that** at least one sensor (10) is provided, seen in the direction of flow (6), in the channel (1) upstream of the distribution device (7), connected to the control or regulating device (11), for determining the volume flow or the flow speed at that location.

5. Ventilation system according to claim 3 or 4, **characterised in that,** seen in the direction of flow (6), at least one sensor (10) is provided in the channel (1) located downstream of the distribution device (7), connected to the control or regulating device (11), for determining the volume flow or the flow speed at that location.

6. Ventilation system according to any one of the two preceding claims, **characterised in that** at least one sensor (10) is configured as a pressure sensor or the like.

## Revendications

1. Système de ventilation conçu pour aérer un local et/ou en expulser l'air, muni d'un canal (1) s'étendant entre un orifice (2) situé côté extérieur d'un bâtiment et un orifice situé côté intérieur du local, un dispositif (3) d'amenée d'air étant prévu dans ledit canal (1), **caractérisé par le fait que** le dispositif (3) d'amenée d'air est relié à une régulation (14) dévolue à une vitesse angulaire constante ou à un débit volumétrique constant ; et **par le fait**
**que**
ledit système de ventilation comporte un chemin de retour (5) bifurquant du canal (1), en aval du dispositif (3) d'amenée d'air en observant dans la direction (6) de l'écoulement, et débouchant dans un dispositif répartiteur (7) qui est logé dans ledit canal (1), en amont dudit dispositif (3) d'amenée d'air en observant dans la direction (6) de l'écoulement, et qui est réalisé en vue de la répartition, notamment de la régulation des proportions du courant d'air circulant, respectivement, par ledit chemin de retour (5) et par ledit canal (1) en amont dudit dispositif répartiteur (7) en observant dans la direction (6) de l'écoulement ;
ou bien que
ledit système de ventilation comporte un chemin de retour (5) bifurquant d'un dispositif répartiteur (7) logé dans le canal (1), en aval du dispositif (3) d'amenée d'air en observant dans la direction (6) de l'écoulement, et débouchant dans ledit canal (1) en amont dudit dispositif (3) d'amenée d'air, en observant dans la direction (6) de l'écoulement, ledit dispositif répartiteur (7) étant réalisé en vue de la répartition, notamment de la régulation des proportions du courant d'air circulant, respectivement, par ledit chemin de retour (5) et par ledit canal (1) en aval dudit dispositif répartiteur (7) en observant dans la direction (6) de l'écoulement.

2. Système de ventilation selon la revendication précédente, **caractérisé par le fait que** le dispositif répartiteur (7) est doté d'un volet (8).

3. Système de ventilation selon l'une des revendications précédentes, **caractérisé par le fait que** la position du dispositif répartiteur (7) peut être modifiée au moyen d'un dispositif (11) de commande ou de régulation, ou d'un entraînement (9) relié à un dispositif (11) de commande ou de régulation.

4. Système de ventilation selon la revendication précédente, **caractérisé par le fait qu'**au moins un capteur (10) raccordé au dispositif (11) de commande ou de régulation est prévu dans le canal (1), en amont du dispositif répartiteur (7) en observant dans la direction (6) de l'écoulement, afin de déterminer le débit volumétrique local ou la vitesse d'écoulement.

5. Système de ventilation selon la revendication 3 ou 4, **caractérisé par le fait qu'**au moins un capteur (10) raccordé au dispositif (11) de commande ou de régulation est prévu dans le canal (1), en aval du dispositif répartiteur (7) en observant dans la direction (6) de l'écoulement, afin de déterminer le débit volumétrique local ou la vitesse d'écoulement.

6. Système de ventilation selon l'une des deux revendications précédentes, **caractérisé par le fait qu'**au moins un capteur (10) est réalisé en tant que capteur de pression, ou d'un type similaire.
